# EUROPEAN PATENT SPECIFICATION

(11) **EP 4 181 028 B1**
(45) Date of publication and mention of the grant of the patent: **17.09.2025**
(21) Application number: 22204626.0
(22) Date of filing: 31.10.2022
(51) Int. Cl.: G06N 3/08, H03M 9/00, H04B 17/391

(54) **METHOD FOR MODELING SERIALIZER/DESERIALIZER MODEL AND METHOD FOR MANUFACTURING SERIALIZER/DESERIALIZER**
VERFAHREN ZUR MODELLIERUNG EINES SERIALISIERUNGS-/DESERIALISIERUNGSMODELLS UND VERFAHREN ZUR HERSTELLUNG EINES SERIALISIERUNGS-/DESERIALISIERUNGSMODELLS
PROCÉDÉ DE MODÉLISATION DE MODÈLE DE SÉRIALISEUR/DÉSÉRIALISEUR ET PROCÉDÉ DE FABRICATION DE SÉRIALISEUR/DÉSÉRIALISEUR

(30) Priority: 11.11.2021 KR 20210155149; 09.05.2022 KR 20220056877
(43) Date of publication of application: 17.05.2023
(73) Proprietor: Samsung Electronics Co., Ltd., Gyeonggi-do 16677 (KR)
(72) Inventor: KIM, Wook, Suwon-si, Gyeonggi-do 16677 (KR); KWON, Soonwon, Suwon-si, Gyeonggi-do 16677 (KR); SONG, Inhwan, Suwon-si, Gyeonggi-do 16677 (KR); SEO, Beomkyu, Suwon-si, Gyeonggi-do 16677 (KR); LIM, Donghyuk, Suwon-si, Gyeonggi-do 16677 (KR)
(74) Representative: Kuhnen & Wacker Patent- und Rechtsanwaltsbüro PartG mbB

(56) References cited:
- LI BOWEN ET AL: "Self-Evolution Cascade Deep Learning Model for High-Speed Receiver Adaptation", IEEE TRANSACTIONS ON COMPONENTS, PACKAGING AND MANUFACTURING TECHNOLOGY, IEEE, USA, vol. 10, no. 6, 1 May 2020 (2020-05-01), pages 1043 - 1053, XP011791071, ISSN: 2156-3950, [retrieved on 20200602], DOI: 10.1109/TCPMT.2020.2992186
- LI BOWEN ET AL: "CTLE Adaptation Using Deep Learning in High- speed SerDes Link", 2020 IEEE 70TH ELECTRONIC COMPONENTS AND TECHNOLOGY CONFERENCE (ECTC), IEEE, 3 June 2020 (2020-06-03), pages 952 - 955, XP033807839, DOI: 10.1109/ECTC32862.2020.00155

## Description

### BACKGROUND

The present invention relates to a method for modeling a serializer/deserializer (SerDes) model.

Recently, research into machine learning has been actively conducted, and the number of platforms for implementing machine learning has increased. Accordingly, due to the high technological accessibility of machine learning, machine learning is readily available to anyone. In particular, because a neural network (NN) used in machine learning may approximate any function mathematically, any model may be similarly imitated using neural network techniques, provided that sufficient data is available for modeling.

In general, signals may be transmitted and received between electronic devices by using a serializer/deserializer (SerDes). There is a need for a method for modeling a SerDes to match an actual SerDes in a simple manner.

From IEEE TRANSACTIONS ON COMPONENTS, PACKAGING AND MANUFACTURING TECHNOLOGY, IEEE, USA, vol. 10, no. 6, 1 May 2020, pages 1043-1053, LI BOWEN ET AL: "Self-Evolution Cascade Deep Learning Model for High-Speed Receiver Adaptation" , it is known a self-evolution cascade deep learning (SCDL) model to model adaptive SerDES behavior. The model uses its own failure experiences to optimize its future solution search according to the prediction of the receiver equalization adaption trend.

From 2020 IEEE 70TH ELECTRONIC COMPONENTS AND TECHNOLOGY CONFERENCE (ECTC), IEEE, 3 June 2020, pages 952-955, LI BOWEN ET AL: "CTLE Adaptation Using Deep Learning in High- speed SerDes Link", it is known a model for high-speed SerDes receiver CTLE adaption behavior, in which deep neural networks model are used to mimic the behavior of the CTLE adaption process in the receiver.

### SUMMARY

It is an object of the invention to provide a method for modeling a serializer/deserializer (SerDes) model in a simple and easy manner.

The object of the invention is attained by a method according to independent claim 1. Further developments of the method are defined by dependent claims.

According to an aspect of some embodiments, there is provided a method implemented on a computer for modeling a serializer/deserializer (SerDes) model, the method comprising generating a plurality of data sets comprising noise simulation data of the SerDes model and output measurement data of an actual SerDes; training a machine learning model based on the plurality of data sets; and applying the trained machine learning model and an estimation model to a model included in the SerDes model, the estimation model being configured to provide the noise simulation data as an input to the trained machine learning model.

According to another aspect of some embodiments, there is provided a computer-readable recording medium storing a computer program which, when executed by a computer, causes the computer to generate a plurality of data sets comprising noise simulation data of a serializer/deserializer (SerDes) model, and output measurement data of an actual SerDes; train a machine learning model based on the plurality of data sets; and apply the trained machine learning model and an estimation model to a model included in the SerDes model, the estimation model being configured to provide the noise simulation data as an input to the trained machine learning model.

### BRIEF DESCRIPTION OF THE DRAWINGS

Embodiments will be more clearly understood from the following detailed description taken in conjunction with the accompanying drawings in which:
FIG. 1 is a block diagram illustrating a serializer/deserializer (SerDes) according to an embodiment;
FIG. 2 is a diagram illustrating a SerDes model according to an embodiment;
FIG. 3 is a flowchart illustrating a method for manufacturing a SerDes, according to an embodiment;
FIG. 4 is a flowchart illustrating a method for modeling a SerDes model, according to an embodiment;
FIG. 5 is a flowchart illustrating a method for generating and storing a data set, according to an embodiment;
FIG. 6 is a flowchart illustrating a method for training a machine learning model, according to an embodiment;
FIGS. 7A and 7B are diagrams illustrating a method for processing training data, according to an embodiment;
FIG. 8 is a diagram illustrating a method for evaluating the accuracy of a neural network (NN), according to an embodiment;
FIG. 9 is a diagram illustrating an NN according to an embodiment;
FIG. 10 is a diagram illustrating a reception model according to an embodiment;
FIG. 11 is a block diagram illustrating an electronic device to which a SerDes chip is applied, according to an embodiment;
FIG. 12 is a perspective view illustrating an electronic device to which a SerDes chip is applied, according to an embodiment;
FIG. 13 is a block diagram illustrating an electronic device to which a SerDes chip is applied, according to an embodiment; and
FIG. 14 is a block diagram illustrating an electronic device to which a SerDes chip is applied, according to an embodiment.

### DETAILED DESCRIPTION

As discussed above, in general, signals may be transmitted and received between electronic devices by using a serializer/deserializer (SerDes). To manufacture a SerDes, a designer may construct a SerDes model by using a simulation device or the like. In this regard, it is advantageous when the SerDes model closely approximates an actual SerDes so that the SerDes model is consistent with the actual SerDes. However, the actual SerDes operates according to various operating environments, and the time taken to simulate the SerDes model for a SerDes that is implemented in various operating environments has increased. As the simulation time increases, it is difficult to determine whether consistency between the actual SerDes and the SerDes model is satisfied, in particular, over the various operating environments. Accordingly, there is a need for a method for modeling a SerDes model to match an actual SerDes over various operating environments in a simple manner.

In some embodiments, there is provided a method for modeling at least a portion of a serializer/deserializer (SerDes) model using a machine learning technology, such as, for example, a neural network, and a method for manufacturing a SerDes based on the modeled SerDes model.

Hereinafter, various embodiments will be described in detail with reference to the accompanying drawings.

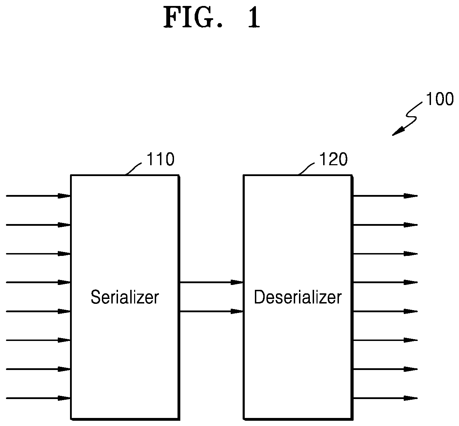

FIG. 1 is a block diagram illustrating a serializer/deserializer (SerDes) 100 according to an embodiment.

Referring to FIG. 1, the SerDes 100 may be an interface that supports communication between one device and another device. The SerDes 100 may convert parallel data into serial data, or may convert serial data into parallel data. The SerDes 100 in the present specification may also be referred to as a "transceiver." The parallel data may be data including parallelized bits, and the serial data may be data including serialized bits.

In an embodiment, the SerDes 100 may include a serializer 110 and a deserializer 120.

The serializer 110 may transmit data (or signals) to the deserializer 120. As a number of pins or the like of an integrated circuit increases the cost to implement the integrated circuit may increase. To reduce such implementation costs, the serializer 110 may transmit data including serialized bits to the deserializer 120. The serializer 110 may receive parallel data from outside and output serial data to the deserializer 120. For example, in some embodiments, the serializer 110 may transmit a signal to the deserializer 120 in a single-ended signaling manner. As another example, in some embodiments, the serializer 110 may transmit, to the deserializer 120, a pair of signals in a double-ended signaling manner or a differential signaling manner. The serializer 110 may be referred to as a "transmitter" or "TX".

The deserializer 120 may receive data (or signals) transmitted from the serializer 110. The deserializer 120 may receive serial data from the serializer 110 and output parallel data. The deserializer 120 may include an amplifier and an equalizer to restore a transmission signal or to compensate for channel loss.

Although not shown, the SerDes 100 may further include a channel. The channel may be a path that physically or electrically connects the serializer 110 to the deserializer 120. The channel may be formed between the serializer 110 and the deserializer 120. In some embodiments, the channel may be implemented using a trace of a printed circuit board (PCB) and/or a coaxial cable. The channel may worsen high-frequency components of a signal due to a skin effect, dielectric loss, or the like. When a signal is transmitted through the channel, channel loss may occur in the deserializer 120. Impedance discontinuity may occur due to connectors and other physical interfaces between boards and cables in the channel. The impedance discontinuity of the channel may appear as a notch in a frequency response of the channel. Reflection noise may occur in the deserializer 120 due to the impedance discontinuity of the channel. Each of bits of data passing through the channel may disturb a next bit(s) due to the channel loss or a bandwidth limitation, and a phenomenon in which a bit error rate (BER) increases due to overlapping of neighboring symbols may occur.

In general, the SerDes 100 may be manufactured based on a SerDes model that is modeled on a computer.

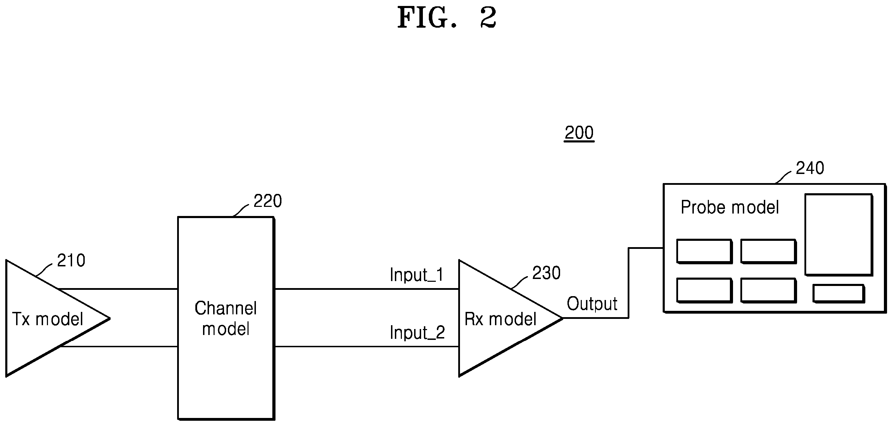

FIG. 2 is a diagram illustrating a SerDes model 200 according to an embodiment.

Referring to FIGS. 1 and 2, the SerDes model 200 may include a transmission model 210, a channel model 220, a reception model 230, and a probe model 240. The SerDes model 200 may be simulated through, for example, an input/output (I/O) buffer information specification-algorithmic modeling interface (IBIS-AMI) model. However, embodiments are not limited thereto.

The transmission model 210 may be obtained by, for example, modeling a configuration such as the serializer 110 shown in FIG. 1. In an embodiment, the transmission model 210 may include a feed-forward equalizer (FFE) model and a transmission analog model.

The channel model 220 may be obtained by modeling a channel provided between the serializer 110 and the deserializer 120.

The reception model 230 may be obtained by, for example, modeling a configuration such as the deserializer 120 shown in FIG. 1. In an embodiment, the reception model 230 may receive a signal in the double-ended signaling manner. In this case, the reception model 230 may receive a first input signal Input_1 and a second input signal Input_2 through the channel model 220. However, embodiments are not limited thereto and, in some embodiments, the reception model 230 may receive a signal in the single-ended signaling manner and may receive in input signal Input.

The reception model 230 may include a control algorithm model, an analog front end (AFE) model, an oscillator model, an analog-to-digital converter model, a digital signal processor model, and the like.

The probe model 240 may be obtained by, for example, modeling a probe that detects an output of the deserializer 120 shown in FIG. 1. The probe model 240 may detect an output value of the reception model 230. The output value of the reception model 230 may include, for example, at least one of an eye opening size value and a bit error rate (BER) value.

Signals may be transmitted between the transmission model 210 and the channel model 220 and between the channel model 220 and the reception model 230 in the double-ended signaling manner.

In some embodiments, the SerDes model 200 may further include a transmission board model and a reception board model. The transmission board model may include a socket model, a board model, and a cable model to be arranged between the transmission model 210 and the channel model 220. The reception board model may include a socket model, a board model, and a cable model to be arranged between the channel model 220 and the reception model 230.

In an embodiment, the characteristics of the SerDes model 200 may include, for example, a data rate of the transmission model 210, the performance of an FFE, jitter, characteristics of a channel, and the like.

When construction of the SerDes model 200 is completed, it is advantageous to have consistency between the performance of the SerDes model 200 and the performance of an actual SerDes (or a SerDes chip, for example, the SerDes 100 shown in FIG. 1). However, because there are various environments in which the actual SerDes operates, it may be complicated to construct the SerDes model 200 to match the performance of the actual SerDes. In particular, because there are various modes for controlling an operation of an AFE model, it may be difficult to simulate the AFE model for each environment in which the actual SerDes operates. Because an operating environment of the actual SerDes varies, when an operating algorithm suitable for such an operating environment is implemented in a simulation model, a simulation time may become very long.

Accordingly, it is advantageous to model at least a portion of the SerDes model 200 using a machine learning technology, for example, a neural network, to match the final performance of the actual SerDes in various operating environments, without the need to separately model an AFE model, a control algorithm, or the like.

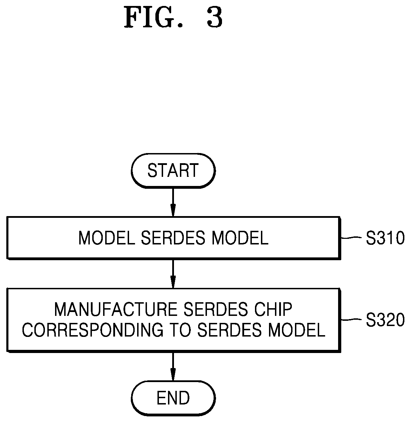

FIG. 3 is a flowchart illustrating a method for manufacturing a SerDes, according to an embodiment.

Referring to FIG. 3, in operation S310, a SerDes model is modeled. The SerDes model is modeled through a model program that is implemented on a computer. Referring to FIG. 2, for example, the SerDes model may include the transmission model 210, the channel model 220, and the reception model 230.

In operation S320, a SerDes chip corresponding to the SerDes model is manufactured. In some embodiments, the SerDes chip may be manufactured based on the SerDes model. Here, the SerDes chip may be an actual SerDes that is manufactured as a chip. For example, the SerDes chip may be manufactured according to a manufacturing operation. The manufacturing operation may be pre-designed.

Hereinafter, a method for modeling a SerDes model is described in detail.

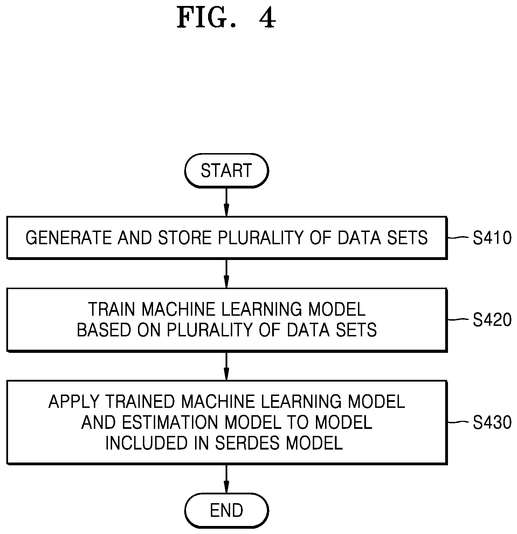

FIG. 4 is a flowchart illustrating a method for modeling a SerDes model, according to an embodiment.

Referring to FIG. 4, in operation S410, a plurality of data sets are generated and the plurality of data sets may be stored. For example, in some embodiments, the plurality of data sets may be generated, and the plurality of data sets may be stored in a database.

In an embodiment, each of the data sets includes noise simulation data of the SerDes model and output measurement data of an experimental SerDes.

The noise simulation data may be data representing a noise value of a simulated SerDes model. For example, the noise simulation data may represent a value of an output signal (or the size of the output signal) that is output from a reception model when an input signal is input to the reception model. In some embodiments, the noise simulation data may include a single bit response (SBR) and residual noise. However, embodiments are not limited thereto. In some embodiments, the residual noise may represent a difference between an expected signal that is restored using the SBR and an actual signal. The residual noise may include various pieces of noise, and may correspond to power for noise generated in the reception model.

The output measurement data may be data representing a measured value of an output signal of an actual SerDes. Here, the actual SerDes may be implemented as a product such as a SerDes manufactured by a manufacturing method of the related art, or a SerDes manufactured for an experiment, or the like. In an embodiment, the output measurement data may represent an eye opening size value and/or a BER value. However, embodiments are not limited thereto.

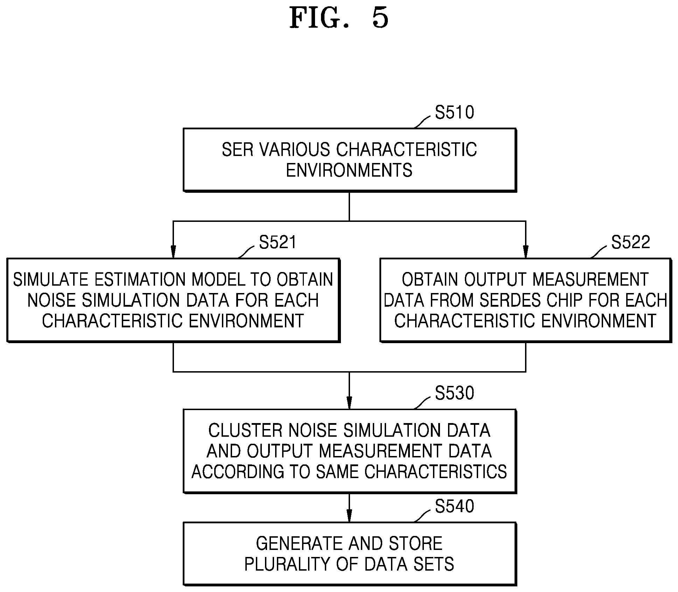

A method for generating and storing the plurality of data sets is described below with reference to FIG. 5.

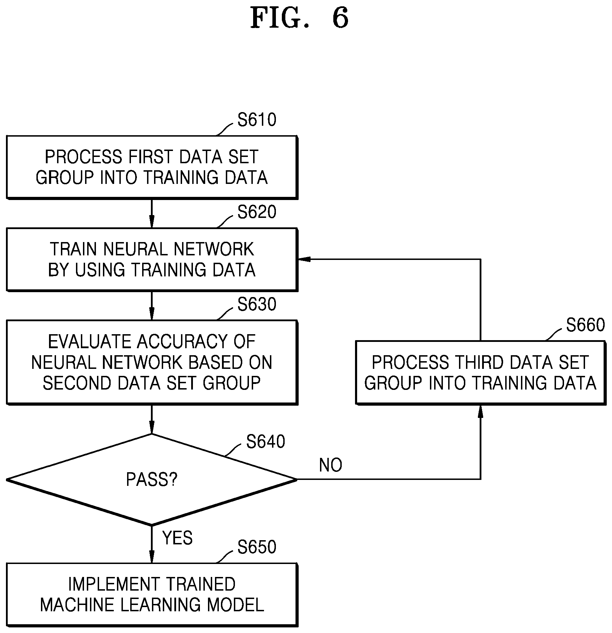

In operation S420, a machine learning model is trained based on the plurality of data sets. The machine learning model is a model to be included in a SerDes model. For example, in some embodiments, the model to be included in the SerDes Model may be the reception model 230. In some embodiments, the machine learning model may be a neural network (NN). In some embodiments, the neural network (NN) implemented in the machine learning model may include, for example, deep learning, a residual network (ResNet), a convolutional neural network (CNN), a recurrent neural network (RNN), or the like. A method for training the machine learning model based on the plurality of data sets is described below with reference to FIG. 6.

In operation S430, the trained machine learning model and an estimation model are applied to a model included in the SerDes model. In some embodiments, the trained machine learning model and the estimation model may be applied to, for example, reception model. In some embodiments, the estimation model may be a model that pre-processes (or processes) an input signal (for example, the first and second input signals Input_1 and Input_2 shown in FIG. 2) input to the reception model to output data (or an input value) to be input to the machine learning model. In some embodiments, the data to be input to the machine learning model may be, for example, training data for training. In some embodiments, the data to be input to the machine learning model may be, for example, noise simulation data. In some embodiments, the estimation model may provide the noise simulation data as an input to the trained machine learning model. The data to be input to the machine learning model may be referred to as "indicator data" that represents an indicator value.

An NN used in machine learning may approximate any function mathematically, according to the universal approximation theorem. As a result, any model may be implemented very similarly, provided that sufficient data is available when modeling the machine learning model. The machine learning model may learn a relationship between a simulation environment (for example, noise simulation data in a specific environment) and an output performance value (for example, output measurement data measured from an actual SerDes in the specific environment), and the trained machine learning model may directly output a performance value (for example, an eye opening size value, a BER value, or the like) to be finally confirmed by a user (for example, a customer). That is, when a data set including associations between the noise simulation data and the output measurement data is obtained as the training data, the reception model may be modeled in a very simple manner with only the machine learning model, which may replace an internal structure of the reception model, without the need to separately model a control algorithm, an AFE model, or the like as the internal structure of the reception model.

In some embodiments, the method for modeling a SerDes model as described above may be executed by a computer program. A computer program for performing the method for modeling a SerDes model may be stored in a computer-readable recording medium. A computer as hardware may access the computer program stored in the computer-readable recording medium and execute the computer program to cause the computer to implement the method for modeling the SerDes model as described above. In some embodiments, the computer as hardware may include at least one processor and at least one memory, the at least one memory may store the computer program, and the at least one processor may access the at least one memory and execute the computer program to execute the method for modeling the SerDes model as described above. In some embodiments, the processor may be a central processing unit (CPU), a microprocessor, a microcontroller, or an application specific integrated circuit specifically code to perform the method. In some embodiments, the computer-readable recording medium may be any data storage device that can store data as a program which can be thereafter read by a computer. Examples of the computer-readable recording medium may include read-only memory (ROM), random-access memory (RAM), CD-ROMs, magnetic tapes, floppy disks, and optical data storage devices. In some embodiments, the computer-readable recording medium can also be distributed over network coupled computer systems so that computer program is stored and executed in a distributed fashion.

FIG. 5 is a flowchart illustrating a method for storing a data set, according to an embodiment.

Referring to FIG. 5, in operation S510, an operation of setting various characteristic environments is performed. The characteristic environment may include, for example, a data rate of a transmission model (see FIG. 2), the performance of an FFE, jitter, and/or characteristics of a channel (the size of the channel, characteristics of a material constituting the channel, or the like). In some embodiments, there may be two or more characteristic environments.

In operation S521, an operation of simulating an estimation model to obtain noise simulation data for each characteristic environment is performed. In detail, for example, an operation of simulating an estimation model to obtain noise simulation data according to characteristics of a SerDes model while changing the characteristics of the SerDes model may be performed. For example, in a first characteristic environment, when an input signal (for example, the first and second input signals Input_1 and Input_2 shown in FIG. 2) is input to the estimation model, a value output from the estimation model may be obtained as the noise simulation data. Similar to the example described above, the noise simulation data may be obtained from the estimation model for each of the set characteristic environments, which are different from each other.

In an embodiment, in the operation of simulating the estimation model (S521), the estimation model may output an SBR and residual noise from an input signal (for example, the first and second input signals Input_1 and Input_2 shown in FIG. 2) input to the estimation model through a preset algorithm. Thus, the noise simulation data may be obtained.

In operation S522, an operation of obtaining output measurement data from a SerDes chip for each characteristic environment is performed. For example, the SerDes chip may be an actual SerDes chip. In some embodiments, the SerDes chip may be a SerDes chip manufactured according to a manufacturing method of the related art, a SerDes chip according to an embodiment, or a SerDes chip for testing. In detail, an operation of obtaining an output value measured from an actual SerDes chip as output measurement data, the actual SerDes chip having the same characteristics as those of a SerDes model, is performed. A measurement device (for example, a probe device) may measure an output value of the SerDes chip. The measured output value may be obtained as the output measurement data.

In an embodiment, operations S521 and S522 may be simultaneously performed, but embodiments are not limited thereto.

In operation S530, an operation of clustering the noise simulation data and the output measurement data according to the same characteristics is performed. That is, the noise simulation data and the output measurement data having the same characteristic environment may be paired with each other as one data set. For example, first noise simulation data simulated in a first characteristic environment and first output measurement data measured in the first characteristic environment may be clustered together, and second noise simulation data and second output measurement data in a second characteristic environment may be clustered together, etc.

In operation S540, an operation of generating the clustered data as a plurality of data sets and storing the data sets is performed. For example, the first noise simulation data and the first output measurement data that are clustered together may be included in a first data set. The second noise simulation data and the second output measurement data that are clustered together may be included in a second data set. By storing a plurality of data sets in a storage device, the plurality of data sets may be databased.

FIG. 6 is a flowchart illustrating a method for training a machine learning model, according to an embodiment.

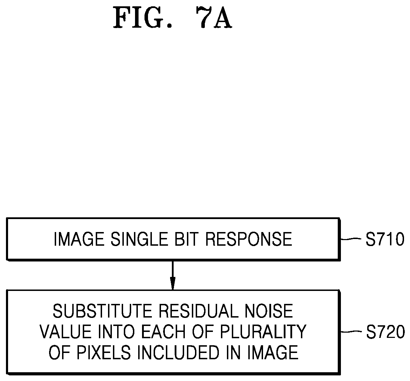

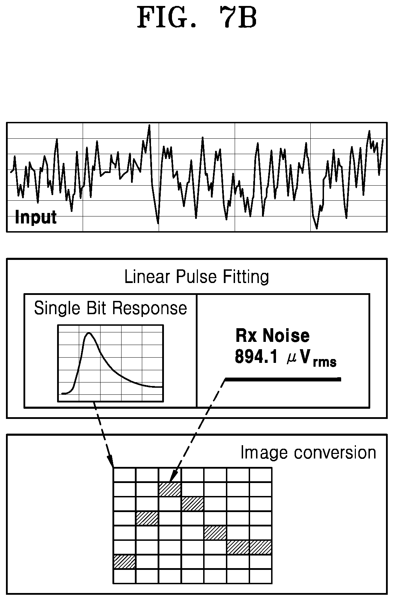

Referring to FIG. 6, in operation S610, an operation of processing a first data set group from among a plurality of data sets into training data is performed. In some embodiments, the first data set group may include at least one data set from among the plurality of data sets as data to be used for training. For example, in some embodiments, some data sets from among the plurality of data sets may be included in the first data set group. In some embodiments, one or more data sets from among the plurality of data sets may be selected as training data. The training data may be data for training an NN implemented in a machine learning model. In some embodiments, when the NN is a CNN, noise simulation data included in a data set may be imaged. An embodiment in this regard is described below with reference to FIGS. 7A and 7B.

In operation S620, an operation of training the NN by using the training data is performed. The NN may be trained such that an input of the NN is noise simulation data, and an output of the NN has the same value as output measurement data.

In operation S630, an operation of evaluating the accuracy of the NN based on a second data set group is performed. In some embodiments, the second data set group may be reference data for comparing with the output measurement data to evaluate accuracy of the NN without being used for training, and may include at least one data set excluding the first data set group from among the plurality of data sets. For example, noise simulation data included in the second data set group may be provided as an input of the NN, an output value of the NN may be compared with a value of output measurement data included in the second data set group, and the accuracy of the NN may be evaluated according to whether the output value of the NN matches the value of the output measurement data.

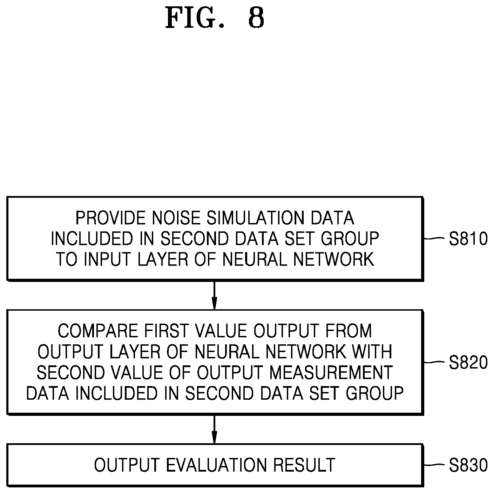

In operation S640, an operation of checking whether the accuracy of the NN passes is performed. For example, the accuracy may be evaluated according to a threshold number of differences between the compared data. For example, in some embodiments, the accuracy may be evaluated based on BERs as discussed below with reference to FIG. 8, and the threshold may be a threshold BER.

When the accuracy of the NN passes (YES in S640), the training is completed, and in operation S650, an operation of implementing the trained machine learning model is performed. In detail, the trained machine learning model may be applied to the model included in the SerDes model (for example, the reception model 230 shown in FIG. 2).

When the accuracy of the NN fails (NO in S640), in operation S660, an operation of processing a third data set group into training data is performed. The third data set group may be a data set previously used for training or a data set that has not been used for training. For example, in some embodiments, the third data set group may be at least partially the same as the first data set group. As another example, in some embodiments, the third data set group may be at least partially the same as the second data set group. As another example, in some embodiments, the third data set group may include at least one data set excluding the first and second data set groups from among the plurality of data sets. However, embodiments are not limited thereto. After operation S660, operation S620 is performed.

FIGS. 7A and 7B are diagrams illustrating a method for processing training data, according to an embodiment.

Referring to FIG. 7A, in the first data set group to be used for training, noise simulation data included in a data set may include an SBR and a residual noise value. The NN may be a CNN or a ResNet used for image classification. In operation S710, an operation of imaging the SBR into an image including a plurality of pixels is performed. Referring to FIG. 7B, for example, an estimation model may receive an input signal. The input signal may be referred to as a "transient signal". The estimation model may extract a Single Bit Response (SBR) (e.g., the Single Bit Response shown in FIG. 7B) and residual noise (e.g., the Rx Noise shown in FIG. 7B) from the input signal through a linear pulse fitting algorithm. In some embodiments, the SBR may be output as a waveform and the residual noise may be output as a single value, as illustrated in FIG. 7B. The estimation model may image the SBR (, e.g., the Image conversion shown in FIG. 7B). In some embodiments, the estimation model may substitute the residual noise into each of a plurality of pixels in the imaged SBR. In some embodiments, the estimation model may generate, as training data, image data in which a residual noise value (for example, 894.1 µVrms shown in FIG. 7B) is substituted into the imaged SBR. In some embodiments, the estimation model may provide the image data described above as an input of the NN.

FIG. 8 is a diagram illustrating a method for evaluating the accuracy of an NN, according to an embodiment.

Referring to FIG. 8, in operation S810, an operation of providing the noise simulation data included in the second data set group to an input layer of the NN is performed.

In operation S820, an operation of comparing a first value output from an output layer of the NN with a second value of the output measurement data included in the second data set group is performed. In an embodiment, the first value and the second value may be BERs. However, embodiments are not limited thereto.

In operation S830, an operation of outputting a result of comparing the first value with the second value as an evaluation result is performed.

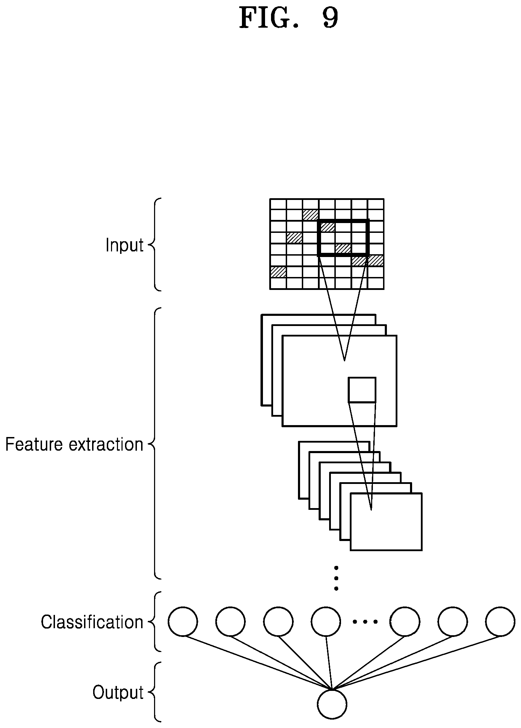

FIG. 9 is a diagram illustrating an NN according to an embodiment.

Referring to FIG. 9, as described above with reference to FIG. 7B, image data extracted by an estimation model may be input to an input layer of the NN shown in FIG. 9. In an embodiment, the NN may be a CNN or a ResNet used for image classification. However, embodiments are not limited thereto.

An output value of the NN may be output through feature extraction (e.g., Feature extraction shown in FIG. 9) for finding a unique feature from the image data in the NN and classification (e.g., Classification shown in FIG. 9) for selecting a feature class. In this case, the output value of the NN may be an eye opening size value or a BER value, like a value of output measurement data. However, embodiments are not limited thereto. Referring to FIG. 9, for example, the output value of the NN may be a BER value, and the BER value may be, for example, 2.1 E-16.

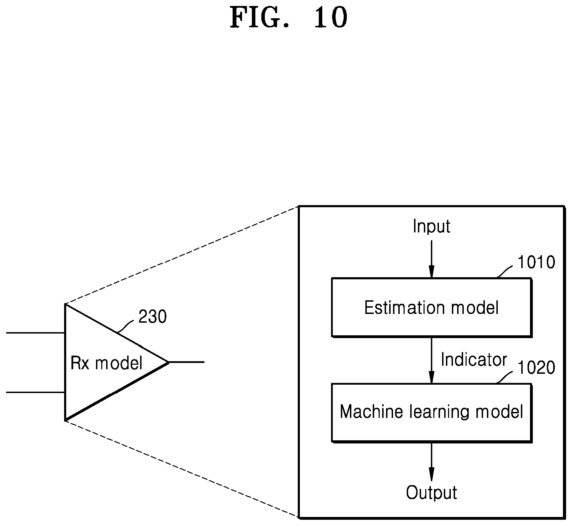

FIG. 10 is a diagram illustrating a reception model according to an embodiment.

Referring to FIG. 10, the reception model 230 modeled according to the modeling method described above may include an estimation model 1010 and a machine learning model 1020.

The estimation model 1010 may extract an SBR (e.g., the Single Bit Response shown in FIG. 7B) and residual noise (e.g., Rx Noise shown in FIG. 7B) from an input (e.g., the first and second input signals Input_1 and Input_2 shown in FIG. 2) by using a linear pulse fitting algorithm. The extracted values (for example, the SBR and residual noise) may be indicators to be input to the machine learning model 1020. The estimation model 1010 may provide an indicator to the machine learning model 1020.

The machine learning model 1020 may output an output value based on an indicator input thereto. The output value may be, for example, a BER value, but is not limited thereto.

According to the reception model 230 described above, a SerDes model may be easily modeled using an NN that has learned simulation and measurement results, instead of an AFE model and a control algorithm model of the related art, which are technically difficult to implement.

According to the modeling method described above, when a data set for training the NN is obtained, the SerDes model may be easily modeled, thereby reducing costs of modeling.

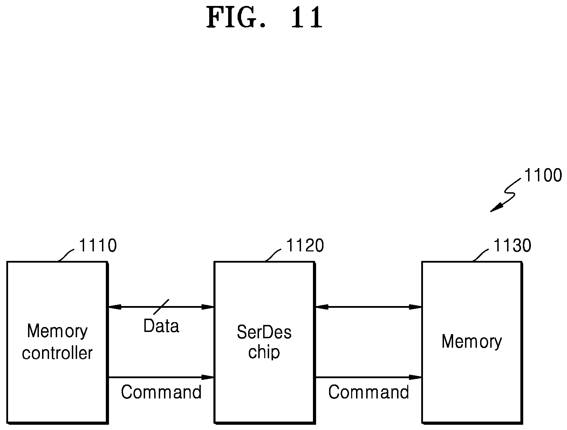

FIG. 11 is a block diagram illustrating an embodiment of an electronic device to which a SerDes chip is applied, according to an embodiment.

Referring to FIG. 11, an electronic device 1100 may include a memory controller 1110, a SerDes chip 1120, and a memory 1130.

The memory controller 1110 may receive a command from the outside the memory controller and transmit the command to the SerDes chip 1120. The memory controller 1110 may receive data from the SerDes chip 1120. For example, when the command received from the outside is a read command, the memory controller 1110 may receive data output from the memory 1130 through the SerDes chip 1120. As another example, when the command received from the outside is a write command, the memory controller 1110 may transmit data to the memory 1130 through the SerDes chip 1120. The memory controller 1110 may perform parallel transmission and parallel reception.

The SerDes chip 1120 may receive a command from the memory controller 1110, may transmit a command to the memory 1130, and may transmit or receive data to or from the memory 1130. That is, in some embodiments, the SerDes chip 1120 may operate as an interface between the memory controller 1110 and the memory 1130. In some embodiments, the SerDes chip 1120 may convert parallel data received from the memory controller 1110 into serial data and transmit the serial data to the memory 1130. In some embodiments, the SerDes chip 1120 may convert serial data received from the memory 1130 into parallel data and transmit the parallel data to the memory controller 1110. In an embodiment, by adopting a half-duplex method, the SerDes chip 1120 may include a transmitter and a receiver to perform transmission and reception functions on one pin.

The memory 1130 may include a plurality of memory cells arranged in a matrix form.

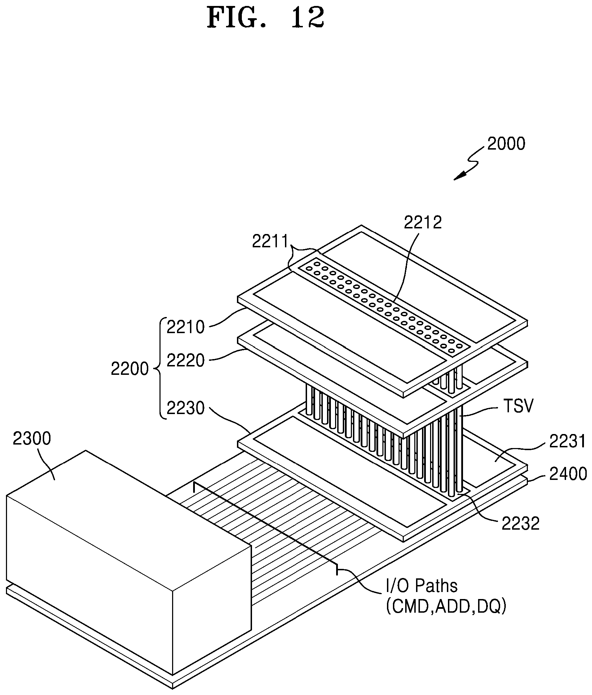

FIG. 12 is a perspective view illustrating an electronic device to which a SerDes chip is applied, according to an embodiment.

Referring to FIG. 12, an electronic device 2000 may include a memory device 2200, a system-on-chip (SoC) 2300, and a substrate 2400.

The memory device 2200 may include memory dies 2210 and 2220 and a buffer die 2230, which are stacked in a vertical direction. The memory device 2200 may be a high bandwidth memory (HBM) device for providing a high bandwidth. The memory device 2200 may be arranged on one surface of the substrate 2400, and a solder ball or a bump may be arranged on one surface of the memory device 2200. The memory device 2200 may be electrically connected to the substrate 2400 through the solder ball or the bump.

Through electrodes TSV may provide physical or electrical paths between the memory dies 2210 and 2220 and the buffer die 2230. For example, the through electrodes TSV may be arranged in a matrix arrangement, but is not limited to those shown in FIG. 12.

The memory die 2210 may include a first area 2211 and a second area 2212. Components included in a memory may be arranged in the first area 2211. The through electrodes TSV and circuits for transmitting or receiving signals through the through electrodes TSV may be arranged in the second area 2212. The memory die 2220 may be implemented substantially the same as the memory die 2210.

The buffer die 2230 (which may also be referred to as a core die or a logic die) may include a first area 2231 and a second area 2232. At least one receiver for receiving a command CMD, an address ADD, and a data I/O signal DQ transmitted from the SoC 2300 through I/O paths may be arranged in the first area 2231. The through electrodes TSV and the circuits for transmitting or receiving signals through the through electrodes TSV may be arranged in the second area 2232. The receiver may be included in a SerDes chip manufactured according to the manufacturing method described above with reference to FIG. 3.

The SoC 2300 may be arranged on one surface of the substrate 2400, and a solder ball or a bump may be arranged on one surface of the SoC 2300. The SoC 2300 may be electrically connected to the substrate 2400 through the solder ball or the bump. The SoC 2300 may include at least one receiver for receiving the data I/O signal DQ transmitted from the memory device 2200 through I/O paths.

The substrate 2400 may provide an I/O path between the SoC 2300 and the memory device 2200. For example, the substrate 2400 may be a PCB, a flexible circuit board, a ceramic substrate, or an interposer. When the substrate 2400 is an interposer, the substrate 2400 may be implemented using a silicon wafer. A plurality of I/O paths may be implemented in the substrate 2400.

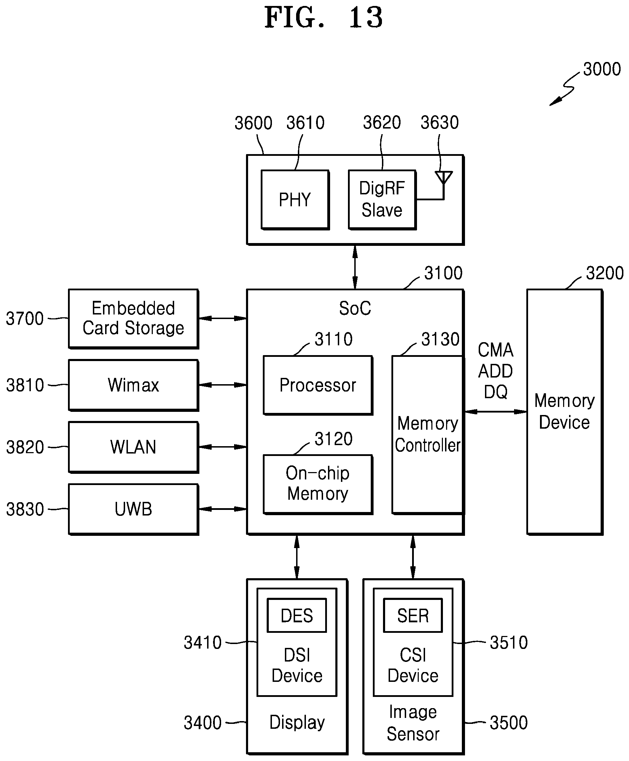

FIG. 13 is a block diagram illustrating an electronic device to which a SerDes chip is applied, according to an embodiment.

Referring to FIG. 13, an electronic device 3000 may be implemented as an electronic device capable of using or supporting interfaces proposed by the Mobile Industry Processor Interface (MIPI) Alliance. For example, the electronic device 3000 may be one of a server, a computer, a smartphone, a tablet, a personal digital assistant (PDA), a digital camera, a portable multimedia player (PMP), a wearable device, an internet of things (IoT) device, a mobile device, and the like, but is not limited thereto.

The electronic device 3000 may include a system on a chip (SoC) 3100 and a memory device 3200.

The SoC 3100 may include a processor 3110, an on-chip memory 3120, and a memory controller 3130. The SoC 3100 may be referred to as an "application processor (AP)". The processor 3110 may execute various programs stored in the on-chip memory 3120, and may control the memory controller 3130. The memory controller 3130 may include components of the memory controller 1110 of FIG. 11. The memory controller 3130 may transmit a command CMD, an address ADD, and a data I/O signal DQ to the memory device 3200. The memory device 3200 may transmit the data I/O signal DQ to the memory controller 3130.

The electronic device 3000 may include a display 3400 communicating with the SoC 3100. The SoC 3100 may communicate with a display serial interface (DSI) device 3410 according to a DSI. An optical deserializer DES may be implemented in the DSI device 3410.

The electronic device 3000 may include an image sensor 3500 communicating with the SoC 3100. The SoC 3100 may communicate with a camera serial interface (CSI) device 3510 according to a CSI. An optical serializer SER may be implemented in the CSI device 3510.

The electronic device 3000 may include a radio frequency (RF) chip 3600 that communicates with the SoC 3100. The RF chip 3600 may include a physical layer 3610, a DigRF slave 3620, and an antenna 3630. For example, the physical layer 3610 and the SoC 3100 may exchange data with each other through a DigRF interface proposed by the MIPI Alliance.

The electronic device 3000 may include an embedded/card storage 3700. The embedded/card storage 3700 may store data provided from the SoC 3100. The electronic device 3000 may communicate with an external system through a worldwide interoperability for microwave access (WiMax) 3810, a wireless local area network (WLAN) 3820, an ultra-wide band 3830 (UWB), or the like.

Each of the components (the SoC 3100, the processor 3110, the on-chip memory 3120, the memory controller 3130, the memory device 3200, the display 3400, the DSI device 3410, the image sensor 3500, the CSI device 3510, the RF chip 3600, the physical layer 3610, the DigRF slave 3620, the antenna 3630, the embedded/card storage 3700, the WiMax 3810, the WLAN 3820, and the UWB 3830) of the electronic device 3000 may include at least one receiver for receiving data from another component of the electronic device 3000. The receiver may be included in a SerDes chip manufactured according to the manufacturing method described above with reference to FIG. 3.

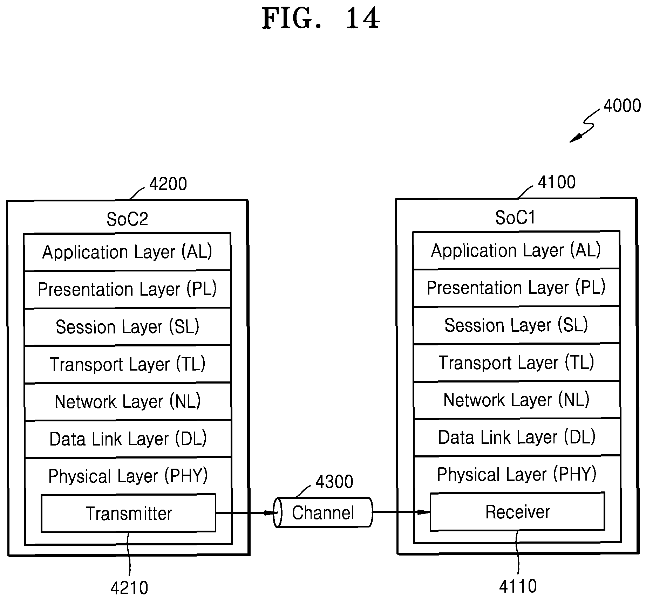

FIG. 14 is a block diagram illustrating another embodiment of an electronic device to which a SerDes chip is applied, according to an embodiment.

Referring to FIG. 14, an electronic device 4000 may include a first SoC 4100 and a second SoC 4200.

The first and second SoCs 4100 and 4200 may communicate with each other based on an open system interconnection (OSI) seven-layer structure of the International Standard Organization. For example, each of the first and second SoCs 4100 and 4200 may include an application layer AL, a presentation layer PL, a session layer SL, a transport layer TL, a network layer NL, a data link layer DL, and a physical layer PHY.

The layers of the first SoC 4100 may logically or physically communicate with the corresponding layers of the second SoC 4100, respectively. The application layer AL, the presentation layer PL, the session layer SL, the transport layer TL, the network layer NL, the data link layer DL, and the physical layer PHY of the first SoC 4100 may communicate with the application layer AL, the presentation layer PL, the session layer SL, the transport layer TL, the network layer NL, the data link layer DL, and the physical layer PHY of the second SoC 4200, respectively.

In an embodiment, the physical layer PHY of the first SoC 4100 may include a receiver 4110. The receiver 4110 may be included in a SerDes chip manufactured by the manufacturing method as described above with reference to FIG. 3.

The physical layer PHY of the second SoC 4200 may include a transmitter 4210 for transmitting a transmission signal through a channel 4300. The transmitter 4210 may be included in a SerDes chip manufactured by the manufacturing method as described above with reference to FIG. 3.

While various embodiments has been particularly shown and described with reference to the drawings, it will be understood that various changes in form and details may be made therein without departing from the scope of the following claims. The claims define the intended limitations.

## Claims

1. A method implemented on a computer for modeling a serializer/deserializer, SerDes, model (200),
the method comprising:
generating (S410) a plurality of data sets comprising noise simulation data of the SerDes model (200) and output measurement data of an actual SerDes (100);
training (S420) a machine learning model based on the plurality of data sets; and
applying (S430) the trained machine learning model and an estimation model to a model included in the SerDes model (200), the estimation model being configured to provide the noise simulation data as an input to the trained machine learning model.

2. The method of claim 1, wherein the SerDes model (200) comprises a transmission model (210), a channel model (220), and a reception model (230), and the model included in the SerDes model (200) is one of the transmission model (210), the channel model (220), and the reception model (230).

3. The method of claim 2, wherein the model included in the SerDes model (200) is the reception model (230).

4. The method of claim 1, wherein the actual SerDes (100) comprises a SerDes chip, and wherein the generating (S410) comprises:
simulating (S521) the estimation model to obtain the noise simulation data according to characteristics of the SerDes model (200) while changing the characteristics of the SerDes model (200);
obtaining (S522) an output value measured from the SerDes chip as the output measurement data, the SerDes chip having characteristics that are the same as the characteristics of the SerDes model (200); and
generating (S540) the plurality of data sets by clustering (S530) the noise simulation data and the output measurement data according to characteristics.

5. The method of claim 4, wherein the simulating (S521) of the estimation model comprises obtaining the noise simulation data by outputting a single bit response, SBR, and residual noise from an input signal through a preset algorithm, the input signal being input to the estimation model.

6. The method of claim 5, wherein the preset algorithm comprises a linear pulse fitting algorithm.

7. The method of claim 1, wherein the output measurement data comprises at least one of an eye opening size value and a bit error rate, BER.

8. The method of claim 1, wherein the training of the machine learning model comprises:
processing (S610) a first data set group from among the plurality of data sets into training data;
training (S620) a neural network, NN, by using the training data;
evaluating (S630) an accuracy of the NN based on a second data set group from among the plurality of data sets, the second data set group excluding the first data set group; and
training (S620) the NN or completing the training, according to an evaluation result (S640) of the accuracy.

9. The method of claim 8, wherein noise simulation data included in a data set of the first data set group comprises a single bit response, SBR, and a residual noise value, and
the processing comprises:
imaging (S710) the SBR into an image including a plurality of pixels; and
generating (S720) the training data by substituting the residual noise value into each of the plurality of pixels.

10. The method of claim 8, wherein the evaluating (S630) comprises:
providing (S810) noise simulation data included in the second data set group to an input layer of the NN;
comparing (S820) a first value output from an output layer of the NN with a second value of output measurement data included in the second data set group; and
outputting (S830) a comparison result as the evaluation result of the accuracy.

11. A computer-readable recording medium storing a computer program which, when executed by a computer, causes the computer to carry out the method of any one of claims 1 to 10.

## Patentansprüche

1. Computerimplementiertes Verfahren zum Modellieren eines Serializer/Deserializer, SerDes, -Modells (200), wobei das Verfahren Folgendes umfasst:
Erzeugen (S410) einer Mehrzahl von Datensätzen, die Rauschsimulationsdaten des SerDes-Modells (200) und Ausgangsmessdaten eines tatsächlichen SerDes (100) umfassen;
Trainieren (S420) eines maschinellen Lernmodells basierend auf der Mehrzahl von Datensätzen; und
Anwenden (S430) des trainierten maschinellen Lernmodells und eines Schätzmodells auf ein im SerDes-Modell (200) enthaltenes Modell, wobei das Schätzmodell dazu konfiguriert ist, die Rauschsimulationsdaten als Eingabe an das trainierte maschinelle Lernmodell bereitzustellen.

2. Verfahren nach Anspruch 1, wobei das SerDes-Modell (200) ein Übertragungsmodell (210), ein Kanalmodell (220) und ein Empfangsmodell (230) umfasst, und wobei das im SerDes-Modell (200) enthaltene Modell eines aus dem Übertragungsmodell (210), dem Kanalmodell (220) und dem Empfangsmodell (230) ist.

3. Verfahren nach Anspruch 2, wobei das im SerDes-Modell (200) enthaltene Modell das Empfangsmodell (230) ist.

4. Verfahren nach Anspruch 1, wobei das tatsächliche SerDes (100) einen SerDes-Chip umfasst, und wobei das Erzeugen (S410) Folgendes umfasst:
Simulieren (S521) des Schätzmodells zur Gewinnung der Rauschsimulationsdaten entsprechend Merkmalen des SerDes-Modells (200), während die Merkmale des SerDes-Modells (200) verändert werden;
Erhalten (S522) eines vom SerDes-Chip gemessenen Ausgangswerts als die Ausgangsmessdaten, wobei der SerDes-Chip Merkmale aufweist, die den Merkmalen des SerDes-Modells (200) entsprechen; und
Erzeugen (S540) der Mehrzahl von Datensätzen durch Clustern (S530) der Rauschsimulationsdaten und der Ausgangsmessdaten entsprechend den Merkmalen.

5. Verfahren nach Anspruch 4, wobei das Simulieren (S521) des Schätzmodells das Gewinnen der Rauschsimulationsdaten durch Ausgeben einer Einzelbitantwort, SBR, und eines Restrauschens aus einem Eingangssignal mittels eines voreingestellten Algorithmus umfasst, wobei das Eingangssignal dem Schätzmodell zugeführt wird.

6. Verfahren nach Anspruch 5, wobei der voreingestellte Algorithmus einen linearen Pulsanpassungsalgorithmus umfasst.

7. Verfahren nach Anspruch 1, wobei die Ausgangsmessdaten zumindest einen der folgenden Werte umfassen: einen Augenöffnungsgrößenwert und eine Bitfehlerrate, BER.

8. Verfahren nach Anspruch 1, wobei das Trainieren des maschinellen Lernmodells Folgendes umfasst:
Verarbeiten (S610) einer ersten Datensatzgruppe aus der Mehrzahl von Datensätzen zu Trainingsdaten;
Trainieren (S620) eines neuronalen Netzes, NN, unter Verwendung der Trainingsdaten;
Bewerten (S630) einer Genauigkeit des NN basierend auf einer zweiten Datensatzgruppe aus der Mehrzahl von Datensätzen, wobei die zweite Datensatzgruppe die erste Datensatzgruppe ausschließt; und
Trainieren (S620) des NN oder Abschließen des Trainings in Abhängigkeit von einem Bewertungsergebnis (S640) der Genauigkeit.

9. Verfahren nach Anspruch 8, wobei Rauschsimulationsdaten, die in einem Datensatz der ersten Datensatzgruppe enthalten sind, eine Einzelbitantwort, SBR, und einen Restrauschwert umfassen, und
das Verarbeiten Folgendes umfasst:
Verarbeitung (S710) der SBR zu einem Bild mit einer Vielzahl von Pixeln; und
Erzeugen (S720) der Trainingsdaten durch Einsetzen des Restrauschwerts in jedes der Vielzahl von Pixeln.

10. Verfahren nach Anspruch 8, wobei das Bewerten (S630) Folgendes umfasst:
Bereitstellen (S810) von Rauschsimulationsdaten, die in der zweiten Datensatzgruppe enthalten sind, an eine Eingabeschicht des NN;
Vergleichen (S820) eines ersten Werts, der von einer Ausgabeschicht des NN ausgegeben wird, mit einem zweiten Wert von Ausgangsmessdaten, die in der zweiten Datensatzgruppe enthalten sind; und
Ausgeben (S830) eines Vergleichsergebnisses als Bewertungsergebnis der Genauigkeit.

11. Computerlesbares Aufzeichnungsmedium, auf dem ein Computerprogramm gespeichert ist, das, wenn es von einem Computer ausgeführt wird, den Computer veranlasst, das Verfahren nach einem der Ansprüche 1 bis 10 auszuführen.

## Revendications

1. Procédé mis en œuvre par ordinateur pour modéliser un modèle de serializer/désérializer, SerDes, (200), ledit procédé comprenant :
génération (S410) d'une pluralité d'ensembles de données comprenant des données de simulation de bruit du modèle SerDes (200) et des données de mesure de sortie d'un SerDes réel (100) ;
entraînement (S420) d'un modèle d'apprentissage automatique basé sur la pluralité d'ensembles de données ; et
application (S430) du modèle d'apprentissage automatique entraîné et d'un modèle d'estimation à un modèle inclus dans le modèle SerDes (200), le modèle d'estimation étant configuré pour fournir les données de simulation de bruit en entrée du modèle d'apprentissage automatique entraîné.

2. Procédé selon la revendication 1, dans lequel le modèle SerDes (200) comprend un modèle de transmission (210), un modèle de canal (220) et un modèle de réception (230), et dans lequel le modèle inclus dans le modèle SerDes (200) est l'un quelconque du modèle de transmission (210), du modèle de canal (220) et du modèle de réception (230).

3. Procédé selon la revendication 2, dans lequel le modèle inclus dans le modèle SerDes (200) est le modèle de réception (230).

4. Procédé selon la revendication 1, dans lequel le SerDes réel (100) comprend une puce SerDes, et dans lequel la génération (S410) comprend :
simulation (S521) du modèle d'estimation pour obtenir les données de simulation de bruit en fonction des caractéristiques du modèle SerDes (200) tout en modifiant lesdites caractéristiques ;
obtention (S522) d'une valeur de sortie mesurée à partir de la puce SerDes comme données de mesure de sortie, ladite puce SerDes présentant des caractéristiques identiques à celles du modèle SerDes (200) ; et
génération (S540) de la pluralité d'ensembles de données par regroupement en clusters (S530) des données de simulation de bruit et des données de mesure de sortie en fonction desdites caractéristiques.

5. Procédé selon la revendication 4, dans lequel la simulation (S521) du modèle d'estimation comprend l'obtention des données de simulation de bruit par émission d'une réponse à un bit unique, SBR, et d'un bruit résiduel à partir d'un signal d'entrée au moyen d'un algorithme prédéfini, ledit signal d'entrée étant fourni au modèle d'estimation.

6. Procédé selon la revendication 5, dans lequel l'algorithme prédéfini comprend un algorithme d'ajustement d'impulsions linéaire.

7. Procédé selon la revendication 1, dans lequel les données de mesure de sortie comprennent au moins l'une des valeurs suivantes : une valeur de taille d'ouverture d'œil et un taux d'erreur binaire, BER.

8. Procédé selon la revendication 1, dans lequel l'entraînement du modèle d'apprentissage automatique comprend :
traitement (S610) d'un premier groupe d'ensembles de données parmi la pluralité d'ensembles de données en tant que données d'entraînement ;
entraînement (S620) d'un réseau neuronal, NN, à l'aide des données d'entraînement ;
évaluation (S630) d'une précision du NN sur la base d'un second groupe d'ensembles de données parmi la pluralité d'ensembles de données, le second groupe excluant le premier groupe ; et
entraînement (S620) du NN ou achèvement de l'entraînement en fonction d'un résultat d'évaluation (S640) de la précision.

9. Procédé selon la revendication 8, dans lequel les données de simulation de bruit comprises dans un ensemble de données du premier groupe comprennent une réponse à un bit unique, SBR, et une valeur de bruit résiduel, et dans lequel le traitement comprend :
conversion (S710) de la SBR en une image comprenant une pluralité de pixels ; et
génération (S720) des données d'entraînement par substitution de la valeur de bruit résiduel dans chacun desdits pixels.

10. Procédé selon la revendication 8, dans lequel l'évaluation (S630) comprend :
fourniture (S810) des données de simulation de bruit comprises dans le second groupe à une couche d'entrée du NN ;
comparaison (S820) d'une première valeur issue d'une couche de sortie du NN avec une seconde valeur des données de mesure de sortie comprises dans le second groupe ; et
sortie (S830) d'un résultat de comparaison en tant que résultat d'évaluation de la précision.

11. Support d'enregistrement lisible par ordinateur sur lequel est enregistré un programme informatique qui, lorsqu'il est exécuté par un ordinateur, amène ledit ordinateur à exécuter le procédé selon l'une quelconque des revendications 1 à 10.
